(19) Europäisches Patentamt
European Patent Office
Office européen des brevets

(11) EP 0 801 136 B1

(12) EUROPÄISCHE PATENTSCHRIFT

(45) Veröffentlichungstag und Bekanntmachung des Hinweises auf die Patenterteilung:
**05.12.2001 Patentblatt 2001/49**

(51) Int Cl.⁷: **C22B 7/04**, C22B 7/02, C22B 5/16, C22B 19/30, C21B 11/00, B09B 3/00, C04B 7/24

(21) Anmeldenummer: **97890067.8**

(22) Anmeldetag: **15.04.1997**

# (54) Verfahren zum Reduzieren von oxidischen Schlacken oder Verbrennungsrückständen über einem Eisenlegierungsbad

Process for reducing oxidic slags or refuse incinerator ashes on a bath of molten iron alloy

Procédé de réduction de laitiers ou cendres d'incinérateurs à ordures oxidés sur un bain d'un alliage de fer en fusion

(84) Benannte Vertragsstaaten:
**AT BE CH DE FR GB IT LI LU NL**

(30) Priorität: **19.04.1996 AT 71796**

(43) Veröffentlichungstag der Anmeldung:
**15.10.1997 Patentblatt 1997/42**

(73) Patentinhaber: **Holcim Ltd.**
**8645 Jona (CH)**

(72) Erfinder: **Edlinger, Alfred, Dipl.-Ing.**
**5400 Baden (CH)**

(74) Vertreter: **Haffner, Thomas M.**
**Patentanwalt,**
**Haffner Thomas M., Dr.,**
**Schottengasse 3a**
**1014 Wien (AT)**

(56) Entgegenhaltungen:
**EP-A- 0 453 904**
**EP-A- 0 707 083**
**EP-A- 0 714 860**
**WO-A-95/17981**
**FR-A- 2 666 592**

- **PATENT ABSTRACTS OF JAPAN vol. 007, no. 135 (C-170), 11.Juni 1983 & JP 58 049622 A (SUMITOMO KINZOKU KOGYO KK), 23.März 1983,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 801 136 B1

Printed by Jouve, 75001 PARIS (FR)

## Beschreibung

Die Erfindung bezieht sich auf ein Verfahren zum Reduzieren von oxidischen Schlacken oder Verbrennungsrückständen über einem Metallbad.

Oxidische Schlacken, welche mehr oder weniger vollständig oxidiert sind, fallen beispielsweise bei der Müllverbrennung oder Müllvergasung an. Üblicherweise wurde bisher versucht, derartige bei der Müllverbrennung bzw. Müllvergasung anfallende Schlacken unmittelbar anschließend einer metallurgischen Nachbehandlung zu unterwerfen, um Schlacken zu erhalten, welche aufgrund ihrer puzzolanischen Eigenschaft als Ausgangsstoffe oder Zumischkomponenten in der Zementindustrie Verwendung finden können. Insgesamt ist aber neben einem relativ aufwendigen Verfahren auch der apparative Aufwand im Umfeld einer Müllverbrennungsanlage relativ hoch, sodaß derartige Anlagen speziell für den gewünschten Zweck konzipiert werden müssen. Müllverbrennungsschlacken sowie Stäube fallen aber nun bei einer Reihe von kommunalen Verbrennungsanlagen an, wobei insbesondere für kleinere Müllverbrennungsanlagen der hohe apparative Aufwand für eine metallurgische Nachbehandlung die Kosten der Entsorgung wesentlich erhöhen würde.

Aus der EP 707 083 A1 ist ein Verfahren zum Aufarbeiten von Müll oder von metalloxidhältigen Müllverbrennungsstücken bekanntgeworden, bei welchem die getrockneten und vorgewärmten Feststoffe einem Schmelzoxidationsreaktor zugeführt werden. Nach einer zumindest teilweisen Oxidation der Schmelze zu Schlacke unter Abscheidung eines Metallbades wird die Schlacke zweistufig reduziert. Die erste Reduktionsstufe wird über einem Eisenbad vorgenommen, wobei das Partialdruckverhältnis $CO:CO_2$ nicht dazu reicht, FeO zu reduzieren. Mit Beginn des Schlakkenflusses über dieses Eisenbad wird Kupferoxid aus der Schlacke herausreduziert, wobei das Eisenbad entsprechend kupferreicher ist. Wenn das Eisenbad bereits etwa 20 Gew.% Kupfer aufweist, wird die Badtemperatur auf etwa 1480° C abgesenkt.

Die Erfindung zielt nun darauf ab, ein Verfahren der eingangs genannten Art zu schaffen, mit welchem oxidische Schlacken unterschiedlicher Provenienz und unterschiedlicher Belastung mit Schwermetalloxiden oder toxischen Substanzen zentral aufgearbeitet werden, sodaß die Möglichkeit besteht, die Einsatzstoffe durch einfache Mischtechniken, wie beispielsweise Mischbettechniken zu vergleichmäßigen und die Schwermetallentkonzentration in der Schlacke exakter bei einfacherer Metallurgie zu steuern. Zur Lösung dieser Aufgabe besteht die Erfindung im wesentlichen darin, daß das Verfahren der eingangs genannten Art so durchgeführt wird, daß als Metallbad eine Eisenlegierung mit edleren Metallen als Eisen, wie z.B. eine FeNi- oder FeCu- oder Sn-Legierung vorgelegt wird, deren Redox-Potential so eingestellt ist, daß FeO nicht oder höchstens teilweise zu Fe reduziert wird, wobei dem Metallbad zur Einstellung des Redox-Potentials Al, FeSi oder C zugesetzt wird und der C-Gehalt des Bades bei Vorliegen von FeNi-Legierungen kleiner 5 Gew.%, vorzugsweise kleiner 4 Gew.%, gehalten wird. Prinzipiell kann mit einem Reineisenbad bzw. Stahlbad die Reduktion von Eisenoxid zu Eisen vermieden werden, wobei jedoch in diesem Falle relativ hohe Temperaturen erforderlich sind. Bei Temperaturen von oberhalb 1700° C treten unerwünschte Probleme mit der Feuerfest-Zustellung auf. Durch die Verwendung einer Eisenlegierung mit edleren Metallen als Eisen, deren Redox-Potential so eingestellt ist, daß FeO nicht zu Fe reduziert wird, wird unmittelbar bei wesentlich tieferen Verfahrenstemperaturen eine Schlacke gebildet, aus welcher Schwermetalle abgetrennt wurden und bei welcher gegebenenfalls vorhandenes Chrom sicher von der 6-wertigen in die 3-wertige Stufe übergeführt wurde. Der verbleibende Schwermetallgehalt der Schlacken liegt im Bereich natürlich vorkommender Gesteine, wobei die reduzierte Schlackenschmelze hervorragende puzzolanische und gute hydraulische Eigenschaften aufweist. Der Gesamtschwermetallgehalt derartig erfindungsgemäß reduzierter Schlacken ist wesentlich geringer als der von vergleichbar eingesetzten Flugaschenmischzement, wobei aufgrund des relativ hohen Gehaltes an zweiwertigem Eisen, welcher bis zu 20 Gew.% in der Schlacke betragen kann, ein Reduktionspotential verbleibt, welches bei Verwendung derartiger Schlacken, Mörteln oder Betonen einen signifikanten Korrosionsschutz bei Stahl-Betonbauwerken bewirkt. Gleichzeitig wird sichergestellt, daß toxisches 6-wertiges Chrom sicher in nicht toxisches 3-wertiges Chrom reduziert ist. Das Redox-Potential, das für die gewünschte unvollständige Reduktion der Schlacken eingestellt wird, kann in einfacher Weise, wie folgt über die freie Enthalpie, definiert werden:

$RT \ln p_{O2}$ soll zwischen 250 und 420 kJ/mol $O_2$ liegen, wobei aufgrund der Temperaturabhängigkeit der freien Enthalpie bevorzugt Werte von etwa 320 kJ/mol $O_2$ bei 1400° C und etwa 290 kJ/mol $O_2$ bei 1500° C eingestellt werden. Die Einstellung erfolgt mit Vorteil so, daß ein Sauerstoffpartialdruck von etwa $10^{-10}$ atm erzielt wird, wobei das Verhältnis $CO/CO_2$ zwischen 1:1 und 1:10 gewählt werden kann.

Um bei den vergleichsweise niederen Verfahrenstemperaturen sicherzustellen, daß die Reduktion in der gewünschten Weise quantitativ erfolgt, kann mit Vorteil so vorgegangen werden, daß durch das Metallbad Spülgas über Bodendüsen eingeleitet wird, wodurch die Reduktionskinetik verbessert wird.

Um sicherzustellen, daß Eisenoxid nicht zu Eisen reduziert wird, darf der Kohlenstoffgehalt des Metallbades nicht zu hoch werden. Die Verwendung von Graphitelektroden zur Beheizung des Metallbades ist aus diesem Grund nicht vorteilhaft. Mit Vorteil wird erfindungsgemäß so vorgegangen, daß das Metallbad indirekt, insbesondere induktiv, beheizt wird, womit ein hinreichend niederer Kohlenstoffgehalt im Bad gewährleistet ist.

Zur exakten Verfahrensführung und Erzielung gleichbleibender Reinheit der Schlacken, wird so vorgegangen, daß dem Metallbad zur Einstellung des Redox-Potentials Al, FeSi oder C zugesetzt wird. Im Falle des Vorliegens von Eisennickellegierung soll erfindungsgemäß hiebei so vorgegangen werden, daß der C-Gehalt kleiner als 5 Gew.%, vorzugsweise kleiner 4 Gew.% gehalten wird, um die Bildung von Nickelkarbiden zu verhindern.

Das erfindungsgemäße Verfahren eignet sich in erster Linie zur zentralen Entsorgung von Müllverbrennungsschlacken unterschiedlicher Provenienz. Um hier sicherzustellen, daß tatsächlich eine vollständig oxidierte Schlacke vorliegt, wird im Rahmen des erfindungsgemäßen Verfahrens so vorgegangen, daß die oxidischen Schlacken vor der diskontinuierlichen Aufgabe auf das Metallbad in einem oxidierend betriebenen Reaktor geschmolzen werden und in einen Vorherd übergeführt werden, aus welchem bei Temperaturen von über 1500° C Cu als Schmelze abgestochen wird. Ein derartiger Einschmelzoxidationsreaktor kann über seine Gichtöffnung mit einer Mischbettschlacke beschickt werden, sodaß eine gleichbleibende Qualität der Einsatzschlacke durch einfache Mischtechniken gewährleistet werden kann. In einem derartigen Einschmelzoxidationsreaktor kann auch nasse Schlacke aufgegeben werden, wobei die Schlacke in diesem Fall zunächst getrocknet, in der Folge vorgewärmt und weiters verflüssigt wird. Das die Schlacke durchströmende Gas muß einen hinreichend hohen Sauerstoff-Partialdruck aufweisen, sodaß alle oxidierbaren Bestandteile der Schlacke, wie Unverbranntes, Restkohlenstoff, Schrottmetalle, wie beispielsweise Eisen, Aluminium od. dgl., verbrennen bzw. oxidiert werden. Analoges gilt für Schwefelverbindungen und Chloridverbindungen. Das Verfahren kann hiebei so geführt werden, daß die Ofenabgase eine Temperatur von ca. 200° C bis 300° C aufweisen, sodaß gegebenenfalls gebildete Dioxine und Furane hauptsächlich in der Schlacke verbleiben und sich ein dynamisches Gleichgewicht zwischen Synthese und oxidativen Abbau innerhalb der Schlackensäule aufbaut. Chlorid- und Schwefelverbindungen werden hiebei quantitativ zersetzt, wobei aufgrund des hohen Sauerstoff-Partialdruckes freies Chlor und $SO_2$ mit den Ofenabgasen abgezogen wird. Gleichzeitig wird sichergestellt, daß im Falle von gleichzeitig eingebrachten Filterstäuben diese unter den streng oxidierenden Bedingungen direkt in die silikatische Schlackenschmelze eingebracht werden, wodurch eine Schwermetallsenke in der silikatischen Schlackenschmelze bei einer Temperatur von unter 1350° C ausgebildet wird. Es wird somit Schwermetall quantitativ zurückgehalten. Dadurch, daß nun an den oxidierend betriebenen Reaktor ein Vorherd angeschlossen wird, kann in diesem Vorherd die Temperatur erhöht werden und beispielsweise auf über 1500° C gebracht werden. Bei dieser Temperatur dissoziieren praktisch alle Kupferverbindungen und insbesondere auch das intermediär gebildete Kupfersilikat. Das gebildete metallische flüssige Kupfer sammelt sich im Sumpf des Schachtofenvorherdes und kann dort periodisch abgestochen werden und somit relativ rein gewonnen werden. Ein Kupfergehalt von über 85 Gew.% ist hiebei ohne weiteres realisierbar. Alle anderen Schwermetalle, wie vor allem Zink und Blei verschlacken unter den genannten Bedingungen nahezu vollständig.

Der Vorherd kann zur Aufrechterhaltung der gewünschten Temperaturen von über 1500° C zur Dissoziation von Kupfersilikat mit Vorteil durch Hilfsbrenner unter überstöchiometrischer Verbrennung im Gasraum beheizt werden. Alternativ können hier heiße Abgase eines Einschmelz-Zyklons eingeleitet werden, welche in der Folge den Schachtofen unter energetische Nutzung der Abwärme durchströmen.

Um auch hier oxidative Bedingungen weiterhin sicher aufrechtzuerhalten kann zusätzlich mit Vorteil durch das Schlackenbad des Vorherdes Luft oder Sauerstoff geblasen werden.

Wie bereits erwähnt, eignet sich das erfindungsgemäße Verfahren bevorzugt für die Aufgabe von Schlacken und/oder Stäuben und/ oder Verbrennungsrückständen aus einer Müllverbrennung oder einer Klärschlammentsorgung und/oder von Trockenklärschlamm, wobei hier auch unvollständig verbrannte Schlacken und Stäube sowie Klärschlamm mit einem hohen Anteil von noch brennbaren Beimengungen oder Schadstoffen sicher oxidiert werden können. So ist beispielsweise eine problemfreie Entsorgung von Klärschlammasche möglich, da durch die effiziente Schwermetallabtrennung und aufgrund des hohen Phosphatgehaltes von Klärschlämmen hochwertiger schwermetallfreier Phosphat-Dünger ("Thomas-Mehl") hergestellt werden kann. Dem Oxidationsreaktor kann unmittelbar auch Klärschlamm aufgegeben werden.

Bevorzugt kann das erfindungsgemäße Verfahren so durchgeführt werden, daß der Einschmelzreaktor als Schachtofen, Kupolofen und/oder Schmelzzyklon ausgebildet ist und mit dem Vorherd in offener Verbindung steht. Insbesondere bei einem Schachtofen kann das Schachtofenabgas mit relativ niedrigen Temperaturen abgezogen werden, sodaß die Gefahr einer Rekombination von Dioxin und Furanen außerhalb des Einschmelzreaktors vermieden wird. Bei Aufarbeitung von großen Staubmengen und bei Verwendung von Trockenklärschlamm bzw. Autoshredderleichtfraktion (Resh) ist die Verwendung eines Schmelz-Zyklones besonders vorteilhaft, wobei hier die Abwärme unmittelbar zur Aufheizung des Vorherdes und des Schachtofens eingesetzt werden kann. Für eine flexible Aufarbeitung unterschiedlicher Aufgabematerialien kann an den Vorherd parallel zum Schachtofen ein Schmelz-Zyklon angeschlossen sein, in welchem Stäube und Trockenklärschlamm oxidiert bzw. verbrannt werden können. Die Abwärme bzw. heißen Abgase des Schmelz-Zyklones können direkt in den Gasraum des Vorherdes eingebracht werden.

Die Einstellung des Redox-Potentials im Metallbadreaktor kann, wie bereits erwähnt, unter anderem auch durch Einblasen von Kohlenstoff, beispielsweise gemeinsam mit Stickstoff erfolgen, wobei eine zusätzliche Regelung durch gesondertes Einblasen von $O_2$ oder Luft erfolgen kann. Eine weitergehende teilweise Verbrennung eines auf diese Weise gebildeten Kohlenmonoxides kann oberhalb des Eisenbades durch Einblasen von Heißluft oder Sauerstoff

in die Schlacke gewährleistet werden, wodurch hier die gewünschte Reduktion weiter gesteuert werden kann. Mit Vorteil wird hiebei so vorgegangen, daß das aus dem Gasraum über dem reduzierenden Metallbad abgezogene Gas zur Abtrennung von Zn und Pb abgekühlt wird und das verbleibende CO im Einschmelz-Oxidator überstöchiometrisch nachverbrannt wird.

Die Erfindung wird nachfolgend anhand eines Ausführungsbeispieles näher erläutert.

Ausführungsbeispiel und Energiebilanzbetrachtungen: Aufgabematerialien

| Müllverbrennungs-Schlacke (MVA-Schlacke) | |
|---|---|
| Komponente | Anteil (%) |
| Schrotteisen | 9 |
| Schrottaluminium | 4 |
| Rest-Kohlenstoff | 1 |
| Zwischensumme | 14 |
| $SiO_2$ | 40 |
| CaO | 15 |
| $Al_2O_3$ | 10 |
| $Fe_2O_3$ | 10 |
| MgO | 2 |
| $Na_2O$ | 4 |
| $K_2O$ | 1 |
| $TiO_2$ | 1 |
| Zwischensumme | 83 |
| Cu | 1 |
| Ni | 0,003 |
| Cr | 0,2 |
| Zn | 0,4 |
| Pb | 0,2 |
| Zwischensumme | 1,8 |
| Endsumme | 98,8 |

| MVA-Staub | |
|---|---|
| Komponente | Anteil (%) |
| $SiO_2$ | 22 |
| $Al_2O_3$ | 19 |
| $Fe_2O_3$ | 4 |
| CaO | 24 |
| MgO | 3 |
| $SO_3$ | 6 |
| $K_2O$ | 4 |
| $Na_2O$ | 3 |
| $TiO_2$ | 2,5 |
| $P_2O_5$ | 1 |
| Cl | 5 |
| Cd | 0,04 |
| Ni | 0,02 |
| Pb | 1 |
| Cr | 0,01 |
| Cu | 0,2 |

(fortgesetzt)

| MVA-Staub | |
|---|---|
| Komponente | Anteil (%) |
| Zn | 3 |
| Sn | 0,15 |
| Endsumme | 97,92 |

Die MVA-Schlacke wurde einem Schachtofen aufgegeben. MVA-Staub gegebenenfalls mit Resh oder Trokkenklärschlamm als Zusatzbrennstoff wurde in einem Schmelz-Zyklon aufgeschmolzen, wobei die Abhitze zum Aufheizen des Vorherdes nutzbar gemacht wurde.

Bei der Totaloxidation von Müllverbrennungsschlacke werden folgende Wärmemengen frei:

| Komponente | Anteil (%) | Ox-Enthalpie ($MJ/t_{Schlacke}$) |
|---|---|---|
| Schrotteisen | 9 | 540 |
| Schrottaluminium | 4 | 1200 |
| Kohlenstoff | 1 | 300 |
| "Brennbares" | 14 | 2040 |

Um die trockene Schlacke zu schmelzen, werden theoretisch ca. 2600 $MJ/t_{Schlacke}$ benötigt. Der thermische Wirkungsgrad im Schachtofen beträgt ca. 65 %, sodaß mit einem aktuellen Wärmebedarf von 4000 $MJ/t_{Schlacke}$ zu rechnen ist.

Die Differenz zwischen "Wärme-Eintrag" durch die KVA-Schlacke und dem aktuellen "Wärme-Bedarf" beträgt also (4000 - 2040) MJ/t = 2000 $MJ/t_{Schlacke}$ oder 560 $kWh/t_{Schlacke}$.

Der Wärmebedarf kann gesenkt werden, wenn die Einsatzschlacke unvollständig verbrannt wurde.

Werte von 5 - 10 % Restkohlenstoff in Müllverbrennungsschlacken sind realistisch. Bei einem Restkohlenstoffanteil von 7 % in der Müllverbrennungsschlacke wird der Schachtofen, wenn dieser nur mit kalter, trockener Schlakke betrieben wird, selbstgängig.

Wärmebedarf bei Zugabe von 10 % Müllverbrennungsstaub

Aufgrund des hohen Chloridanteiles des KVA-Staubes muß dieser auf einen Chloridanteil von < 0,5 % gewaschen werden. Das Waschwasser reagiert aufgrund des hohen Freikalkgehaltes basisch. Dies ist sehr vorteilhaft, da dadurch die Schwermetalle als Hydroxide niedergeschlagen werden und das Chlorid in das Abwasser geht.

$$Ca(OH)_2 + 2\ SMCl \rightarrow CaCl_2 + SMOH$$

Der pH-Wert des Waschwassers wurde auf 10,5 - 12 durch Zugabe von NaOH oder $H_2SO_4$ eingestellt. Der gewaschene Filterstaub wurde aus dem Abwasser gefiltert und auf 2 % Restfeuchte (110° C) getrocknet. Der trockene KVA-Staub wurde in die Schmelze des Schachtofens mittels Sauerstoff eingeblasen. Dabei verschlacken die Schwermetalle und restliche Chloride und Schwefel werden ausgetrieben:

$$SMCl + 1/2\ O_2 + SiO_2 \rightarrow SMSiO_3 + 1/2\ Cl_2$$

$$SMS + 1{,}5\ SiO_2 \rightarrow SMSiO_3 + SO_2$$

Aufgrund der hohen Schmelztemperaturen dissoziieren die Cu-Verbindungen im Vorherd zu metallischem Kupfer:

$$Cu\ SiO_3 \xrightarrow{T > 1530°\ C} Cu + SiO_2 + 1/2\ O_2$$

Der Schmelz-Wärmebedarf des trockenen, gewaschenen Filterstaubes beträgt rund 4900 MJ/t. Somit ergibt sich der theoretische Schmelz-Wärmebedarf einer Mischung, die aus 10 % Staub und 90 % Schlacke besteht, mit (4900 x 0,1 + 2600 x 0,9) = 2850 MJ/t Gemenge. Der praktische Wärmebedarf liegt bei 4400 MJ/t Gemenge. Damit dieses "Gemenge" im Schachtofen selbstgängig aufschmilzt, müßte der Restkohlenstoffanteil der KVA-Schlacke auf ca. 9 % angehoben werden. (→ Unvollständiger Schlackenausbrand am Rost). Falls dies nicht möglich ist, kann Trokkenklärschlamm oder Autoshredder-Leichtfraktion (Resh) über Brenner zugefeuert werden oder in einem Schmelz-Zyklon eingesetzt werden.

Die bei 1530° C oxidierte Schlackenschmelze ist praktisch frei an Kupfer. Falls der Cu-Wert trotzdem noch zu hoch ist, kann dieser durch Zugabe von geringsten Mengen von FeSi oder schwefelfreien Gußeisen-Spänen im Schachtofen-Vorherd praktisch auf "Null" eingestellt werden.

Die restlichen Schwermetalle, insbesondere Zn und Pb wurden zum Großteil verschlackt.

Die Schlackenschmelze wurde hierauf in einen Metallbadreaktor übergeführt.

Der Metallbadreaktor kann in vorteilhafter Weise mit

- einer Fe/Ni-Legierung
- einer Fe/Ni/C-Legierung
- einer Fe/Cu-Legierung
- einer Fe/Cu/C-Legierung
- einer Fe/Cu/Ni-Legierung
- einer Fe/Cu/Ni/C-Legierung

sowie mit der überschichteten Schlackenschmelze befüllt werden.

Die Legierung wurde entsprechend der gewünschten Schlacken-Metallurgie gewählt.

Im Beispiel wurden alle Schwermetalle, die edler wie Eisen sind, mittels einer Fe/Ni-Legierung bei maximal 1500° C reduziert, z.B.:

$$ZnSiO_3 + (Fe/Ni) \rightarrow Zn\uparrow + FeSiO_3 + (.../Ni)$$

Die siderophilen Schwermetalle verdampfen (Zn, Pb). Im Beispiel wurde eine Legierung vorgelegt, die 18 % Ni und 82 % Fe aufweist. Im Laufe des Schlackenwechsels wird Fe über den oben beschriebenen Redoxvorgang laufend aufgebraucht. Um noch genügend Zn verdampfen zu können, darf die Endlegierung nicht mehr als 56 % Ni aufweisen, da diese sonst zu "edel" für die Buntmetall-Reduktion wäre, wie sich aus dem "Richardson-Diagramm" ablesen läßt.

Der Schmelzbereich der relevanten Legierungen liegt immer unterhalb von 1500° C, sodaß die Standzeit von Feuerfest-Auskleidungen wesentlich verbessert wird.

Mit dieser Fahrweise ist sichergestellt, daß kein Schlacken-FeO reduziert wird.

Falls mit der 56 %igen Ni-Legierung weiter ZnO oder Buntmetalle reduziert werden sollen, kann dies geschehen, indem man der Legierung Kohlenstoff im stöchiometrischen Maße zusetzt. Die Reduktion erfolgt dann über den im Eisenbad gelösten Kohlenstoff:

$$ZnSiO_3 + (C/Fe/Ni) \rightarrow Zn\uparrow + CO + SiO_2 + (.../Fe/Ni)$$

Falls weiter Kohlenstoff zudosiert wird, beginnt auch das Schlacken-Fe zu reduzieren und der Eisengehalt der Ni/Fe-Legierung beginnt entsprechend anzusteigen:

$$XFe\ SiO_3 + (C/Fe/Ni) \rightarrow XSiO_2 + CO\uparrow + (...Fe + Fe_x/Ni)$$

Dies soll jedoch vermieden werden.

Falls nur im System Fe/Ni gearbeitet wird, ist es vorteilhaft, in einem induktiv beheizten Konverter mit Bodenspülung ($N_2$) zur Erhöhung der Badturbulenz zu spülen. Das verbrauchte Fe wird periodisch oder besser nach jedem Schlackenabstich wieder auf den Ausgangswert (82 % Fe) gebracht.

Anstelle der induktiven Beheizung kann auch eine fossile Beheizung erfolgen. Dies hat jedoch den Nachteil, daß die verdampften Schwermetalle Zn und Pb mit den Verbrennungsabgasen verdünnt werden.

Falls im System C/Fe/Ni gearbeitet wird, wird vorteilhafterweise mit der "Endlegierung" von 56 % Ni gearbeitet und eine stöchiometrische Kohlenstoffmenge, bezogen auf die zu reduzierende Buntmetall-Menge, die edler als Eisen ist, zudosiert. Es hat sich als günstig herausgestellt, dabei den Kohlenstoffgehalt der Legierung bei 3 % zu halten. Beim eigentlichen Reduktionsvorgang verändert sich die Fe/Ni-Legierung nicht wesentlich, diese dient dabei lediglich als Kohlenstoff-Träger.

Als Ofensystem wird bevorzugt ein bodenblasender Konverter eingesetzt.

Ein weiterer, wesentlicher Vorteil dieser Verfahrensführung liegt in der Möglichkeit, mit tieferen Eisenbad-Temperaturen (ca. 1430° C) zu fahren und die Energetik günstiger sowie technisch einfacher zu gestalten.

Allenfalls im Reduktionsschritt in das Ni/Fe-Bad überführter Phosphor oder Schwefel kann durch einen Zwischen-Frisch-Prozeß in eine basische Schlacke verbracht werden. Die entstehenden Kalzium-Phosphor-(Schwefel)-Schlacken stellen einen begehrten chromfreien Kunst-Dünger ("Thomas-Mehl") dar.

Schwefel gelangt aber bei der beschriebenen Verfahrensführung nicht in den Eisenbad-Konverter. Schwefel wird bevorzugt im oxidierend betriebenen Schachtofen "abgeröstet". Die "saure", hoch kieselsäure-haltige Schlacke weist keinerlei Rückhaltevermögen für Schwefel und dessen Oxidationsprodukte auf.

Bei Vorlage von Fe/Ni zur ZnPb-Reduktion kann wahlweise mit Erdgas durch die Bodendüse gefahren werden. Das Erdgas reagiert nicht mit dem Metallbad, sondern wirkt als Rührmedium in der Flüssigphase (Schlacke/Metallbad-Suspension). Das durch die Flüssigphase tretende Erdgas wird mittels Lanze im KonverterOberteil (Gasraum) verbrannt. Dadurch wird der Konverter heiß gehalten und die Verbrennungswärme wird durch Strahlungswärme auf die turbulente Suspension übertragen. Die verdampfenden Schwermetalle Zn und Pb werden aufoxidiert und verlassen mit den Abgasen die Konverter-Mündung.

Alternativ kann mit Induktionsheizung gefahren werden. Stickstoff dient als Rührmedium. Zn und Pb verdampfen und können metallisch nach der Konverter-Mündung kondensiert werden. Die Lanze ist ausgefahren.

Die Wärme wird durch Kohlenstoff-Vergasung eingebracht (Bodendüsen):

$$C + 1/2\ O_2 \rightarrow CO$$

bzw. durch Nachverbrennung im Konverteroberteil:

$$CO + 1/2\ O_2 \rightarrow CO_2$$

Dabei kann bis zu 55 % des CO bei reinem Luftbetrieb der Lanze nachverbrannt werden.

Als vorteilhaft hat sich eine Feuerfest-Zustellung mit hochtonerdehaltigem Magnesit herausgestellt ("SPINELL"). Der $Al_2O_3$-Gehalt der Schlackenschmelze kann mit Vorteil auf mindestens 22 % angehoben werden, wodurch sich an der Grenzfläche Feuerfest/ Schlackenschmelze eine selbstschützende, hochspinellhaltige Zwischenlage ausbildet.

Die Zugabe von $Al_2O_3$ hat auch einen sehr günstigen Einfluß auf das Frühfestigkeitsverhalten des durch Wassergranulation gewonnenen Puzzolan-Zementes.

Zur Entfernung des kumulierten Phosphors im FeNi-Bad wird diesem Branntkalk, beispielsweise durch die Unterbaddüsen, aufgegeben und mit Sauerstoff gefrischt. Dabei wird das Düngemittel "Thomas-Mehl" erhalten und das FeNi-Bad regeneriert.

In der Zeichnung sind für die Durchführung des erfindungsgemäßen Verfahrens geeignete Vorrichtungen schematisch dargestellt. In dieser zeigen Fig. 1 einen Schachtofen mit nachgeschalteten Metallbadreaktor, Fig. 2 eine vergrößerte Darstellung eines für die Durchführung des erfindungsgemäßen Verfahrens geeigneten Metallbadreaktors und Fig. 3 einer Einrichtung nach Fig. 1 mit zusätzlichem Schmelz-Zyklon.

In Fig. 1 ist mit 1 ein Schachtofen bezeichnet, dessen Gichtöffnung 2 mit Müllverbrennungsschlacke beschickt wird. Die Müllverbrennungsschlacke wird in einem Mischbett 3 homogenisiert, und es werden unterschiedliche Schlakken mit unterschiedlichen Zusammensetzungen auf im wesentlichen gleiche Schlackenanalyse eingestellt. Die Fördereinrichtung für die Schlacke ist schematisch mit 4 angedeutet.

Der Schachtofen 1 wird oxidativ beheizt und das Aufgabematerial gelangt über eine Vorwärmzone, aus welcher über Öffnungen 5 Abgas und insbesondere $SO_2$, $Cl_2$, HCl sowie flüchtige Verbindungen abgezogen werden, in eine Reaktionszone, bei welcher durch Aufrechterhalten eines hohen Sauerstoff-Partialdruckes durch Eindüsen von Sauerstoff über die Leitungen 6 oxidative Bedingungen sichergestellt werden. In der Folge wird die Schlacke geschmolzen und kann über einen Stößel 7 in einen Vorherd 8 übergeführt werden. Die im Vorherd 8 gebildete Schlackenschmelze 9 wird über Unterbaddüsen 10 mit Sauerstoff versorgt, und es kann bei Temperaturen von über 1500° C

über die Abstichöffnung 11 periodisch Kupfer abgestochen werden. Der Gasraum des Vorherdes 8 ist über Hilfsbrenner 12 unter überstöchiometrischer Verbrennung zur Aufrechterhaltung oxidierender Bedingungen beheizt.

Die vollständig oxidierte Schlacke kann periodisch über den Schlackenabstich 13 in einen Metallbadreaktor 14 übergeführt werden. Im Metallbadreaktor wird eine Eisen-Nickel-Legierung als Metallbad 15 vorgelegt. Die Schlacke 9 wird über eine Lanze 16 mit Heißluft bzw. Sauerstoff bedüst, wobei die reduzierenden Bedingungen im Metallbadreaktor 14 durch die Legierungselemente Nickel, Kupfer oder Zinn sichergestellt werden. Eine weitere Einstellung des Redox-Potentiales kann durch Einblasen von Kohlenstoff über Bodendüsen 17 erfolgen. Über diese Bodendüsen kann gleichzeitig Stickstoff zur Erhöhung der Badturbulenz und gegebenenfalls Sauerstoff zur gezielten Verschlackung von Phosphor eingeblasen werden.

Müllverbrennungsstaub kann aus einem Silo 18 über Leitungen 19 mit Preßluft oder Sauerstoff in das Schlakkenbad des Vorherdes des Schachtofens eingeblasen werden, sodaß auch Müllverbrennungsstäube entsorgt werden können.

In Fig. 2 ist ersichtlich, daß der Metallbadreaktor 14 über wassergekühlte Induktionsheizungsspiralen 20 beheizt ist. Es wird ein Eisen-Nickel-Bad 15 vorgelegt. Mit 21 ist die Feuerfest-Auskleidung bezeichnet. Die Bodendüsen 17 sind in einem Düsenstein 22 angeordnet. Die Blaslanze 16 ist als wassergekühlte Sauerstoffluftlanze ausgebildet und in axialer Richtung verstellt. Der Metallbadreaktor kann über Schwenkzapfen 23 kippbar gelagert sein, sodaß diskontinuiert die jeweils gebildete eisenoxidhältige, aber weitestgehend reduzierte Schlacke ausgebracht werden kann.

In Fig. 3 ist parallel zum Schachtofen 1 ein Schmelz-Zyklon 24 an den Vorherd 8 angeschlossen. Der Schmelz-Zyklon wird mit RESH, Trockenklärschlamm und/oder Müllverbrennungsstäuben beschickt bzw. befeuert, wobei wassergekühlte Schlangen 25 zur Dampferzeugung und Energierückgewinnung vorgesehen sind. Die heißen Gase durchströmen in Richtung der Pfeile 26 den Vorherd 8 und dienen in der Folge der weiteren Erwärmung des Aufgabematerials im Schachtofen 1, wobei auf Hilfsbrenner im Vorherd 8 verzichtet werden kann. Der Schmelz-Zyklon kann Aufgabematerial mit einer Granulometrie von 40 µm bis 7 mm verarbeiten.

## Patentansprüche

1. Verfahren zum Reduzieren von oxidischen Schlacken oder Verbrennungsrückständen über einem Metallbad, **dadurch gekennzeichnet, daß** als Metallbad (15) eine Eisenlegierung mit edleren Metallen als Eisen, wie z.B. eine FeNi- oder FeCu- oder Sn-Legierung vorgelegt wird, deren Redox-Potential so eingestellt ist, daß FeO nicht oder höchstens teilweise zu Fe reduziert wird, wobei dem Metallbad (15) zur Einstellung des Redox-Potentials Al, FeSi oder C zugesetzt wird und der C-Gehalt des Bades (15) bei Vorliegen von FeNi-Legierungen kleiner 5 Gew.%, vorzugsweise kleiner 4 Gew.% gehalten wird.

2. Verfahren nach Anspruch 1, **dadurch gekennzeichnet, daß** durch das Metallbad (15) Spülgas über Bodendüsen (17) eingeleitet wird.

3. Verfahren nach Anspruch 1 oder 2, **dadurch gekennzeichnet, daß** das Metallbad (15) indirekt, insbesondere induktiv, beheizt wird.

4. Verfahren nach Anspruch 1, 2 oder 3, **dadurch gekennzeichnet, daß** die oxidischen Schlacken vor der diskontinuierlichen Aufgabe auf das Metallbad (15) in einem oxidierend betriebenen Reaktor geschmolzen werden und in einen Vorherd (8) übergeführt werden, aus welchem bei Temperaturen von über 1500° C Cu als Schmelze abgestochen wird.

5. Verfahren nach Anspruch 4, **dadurch gekennzeichnet, daß** der Vorherd (8) durch Hilfsbrenner (12) oder heiße Abgase eines Schmelz-Zyklones (24) unter überstöchiometrischer Verbrennung im Gasraum beheizt wird.

6. Verfahren nach einem der Ansprüche 4 und 5, **dadurch gekennzeichnet, daß** durch das Schlackenbad (9) des Vorherdes (8) Luft oder Sauerstoff geblasen wird.

7. Verfahren nach einem der Ansprüche 4 bis 6, **dadurch gekennzeichnet, daß** dem oxidierend betriebenen Einschmelzreaktor Schlacken und/oder Stäube und/oder Aschen aus einer Müllverbrennung oder einer Klärschlammentsorgung und/oder Trockenklärschlamm aufgegeben werden.

8. Verfahren nach einem der Ansprüche 4 bis 7, **dadurch gekennzeichnet, daß** der Einschmelzreaktor als Schachtofen (1), Kupolofen und/oder Schmelz-Zyklon ausgebildet ist und mit dem Vorherd (8) in offener Verbindung steht.

**9.** Verfahren nach einem der Ansprüche 4 bis 8, **dadurch gekennzeichnet, daß** das aus dem Gasraum über dem reduzierenden Metallbad (15) abgezogene Gas zur Abtrennung von Zn und Pb abgekühlt wird und das verbleibende CO im Einschmelz-Oxidator überstöchiometrisch nachverbrannt wird.

## Claims

**1.** Procedure for reducing oxide slag or combustion residues via a metal bath, **characterized in that**, as metal bath (15), a ferrous alloy with metals nobler than iron, such as, for example, a FeNi or FeCu or Sn alloy is present, whose redox potential is adjusted so that FeO is not, or at most is only partially reduced to Fe, during which process Al, FeSi or C is added to the metal bath (15) to adjust the redox potential and the C content of the bath (15) in the presence of FeNi alloys is kept below 5 wt.%, and preferably below 4 wt.%.

**2.** Procedure according to Claim 1, **characterized in that** scavenging gas is injected through the metal bath (15) via the nozzles (17) in the base of the bath.

**3.** Procedure according to Claim 1 or 2, **characterized in that** the metal bath (15) is heated indirectly, especially inductively.

**4.** Procedure according to Claim 1, 2 or 3, **characterized in that** the oxide slag, before discontinuous delivery into the metal bath (15) was melted in a reactor with oxidizing operation, and transferred into a forehearth (8) from which, at temperatures of above 1500°C Cu is drawn off as melt.

**5.** Procedure according to Claim 4, **characterized in that** the forehearth (8) is heated via auxiliary burners (12) or hot exhaust gases from a melt cyclone (24) during super-stoichiometric combustion in the gas chamber.

**6.** Procedure according to either of Claims 4 and 5, **characterized in that** air or oxygen is injected through the slag bath (9) of the forehearth (8).

**7.** Procedure according to any one of Claims 4 to 6, **characterized in that** slag and/or dust and/or ash from a refuse incinerator or a sewage sludge removal plant, and/or dry sewage sludge are delivered to the melting reactor with oxidizing operation.

**8.** Procedure according to any one of Claims 4 to 7, **characterized in that** the melting reactor is in the form of a shaft furnace (1), cupola furnace and/or melt cyclone and is in open connection with the forehearth (8).

**9.** Procedure according to any one of Claims 4 to 8, **characterized in that** the gas drawn off from the gas chamber via the reducing metal bath (15) is cooled to separate Zn and Pb, and the residual CO in the melting-oxidator is after-burned super-stoichiometrically.

## Revendications

**1.** Procédé de réduction de laitiers oxydiques ou de résidus de combustion par un bain métallique, **caractérisé en ce qu'**est présent en tant que bain métallique (15) un alliage de fer comportant des métaux plus nobles que le fer, comme par exemple un alliage FeNi, FeCu ou Sn, dont le potentiel d'oxydoréduction est ajusté de façon à ce que FeO ne soit pas ou soit au plus partiellement réduit en Fe, où Al, FeSi ou C est ajouté au bain métallique (15) pour ajuster le potentiel d'oxydoréduction et où la teneur en C du bain (15) est maintenue inférieure à 5 % en poids, de préférence inférieure à 4 % en poids, en présence d'alliages de FeNi.

**2.** Procédé selon la revendication 1, **caractérisé en ce que** du gaz de circulation est introduit à travers le bain métallique par des buses de fond (17).

**3.** Procédé selon la revendication 1 ou 2, **caractérisé en ce que** le bain métallique (15) est chauffé indirectement, en particulier par induction.

**4.** Procédé selon la revendication 1, 2 ou 3, **caractérisé en ce que** les laitiers oxydants sont fondus avant le chargement par lot sur le bain métallique (15) dans un réacteur exploité de façon oxydante, et sont transférés dans

un avant-foyer (8) depuis lequel Cu est soutiré en tant que masse fondue à des températures supérieures à 1 500 °C.

**5.** Procédé selon la revendication 4, **caractérisé en ce que** l'avant-foyer (8) est chauffé par des brûleurs auxiliaires (12) ou des gaz d'échappement chauds d'un cyclone à matière fondue (24) par combustion dans des conditions sur-stoechiométriques dans le compartiment du gaz.

**6.** Procédé selon l'une des revendications 4 et 5, **caractérisé en ce que** de l'air ou de l'oxygène est insufflé par le bain de laitiers (3) de l'avant-foyer (8).

**7.** Procédé selon l'une des revendications 4 à 6, **caractérisé en ce que** l'on ajoute dans le réacteur de fusion exploité de façon oxydante des laitiers et/ou des poussières et/ou des cendres issus de l'incinération d'ordures ou d'une décharge de boues et/ou de boues de purification sèches.

**8.** Procédé selon l'une des revendications 4 à 7, **caractérisé en ce que** le réacteur de fusion est conçu en tant que four à laitier (1), four à coupole et/ou cyclone à matière fondue et se trouve en relation ouverte avec l'avant-foyer (8).

**9.** Procédé selon l'une des revendications 4 à 8, **caractérisé en ce que** le gaz soutiré de la chambre de gaz au-dessus du bain métallique réducteur (15) est refroidi pour séparer Zn et Pb et **en ce que** le CO restant subit une postcombustion dans un dispositif d'oxydation de matière fondue dans des conditions sur-stoechiométriques.

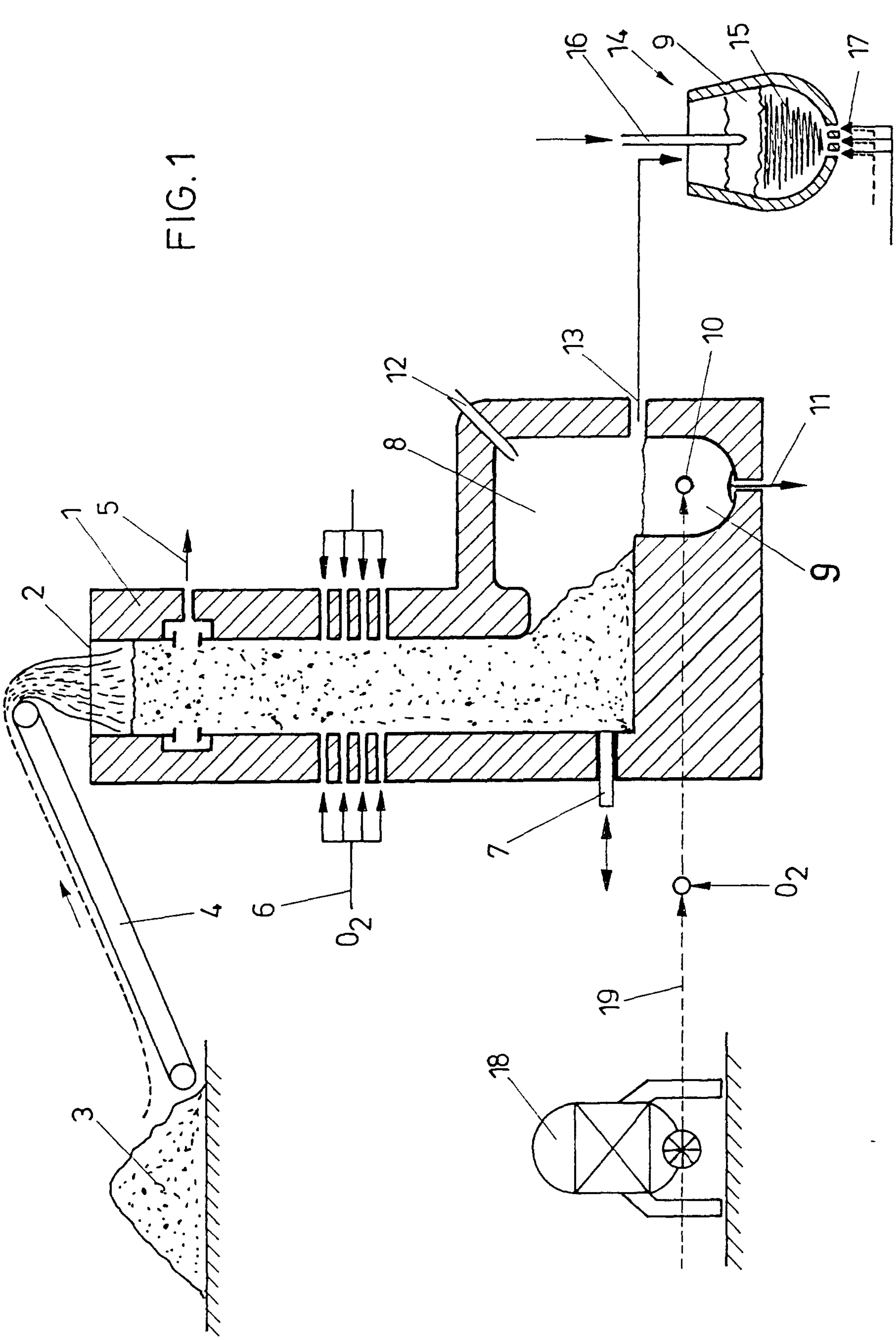


FIG. 1

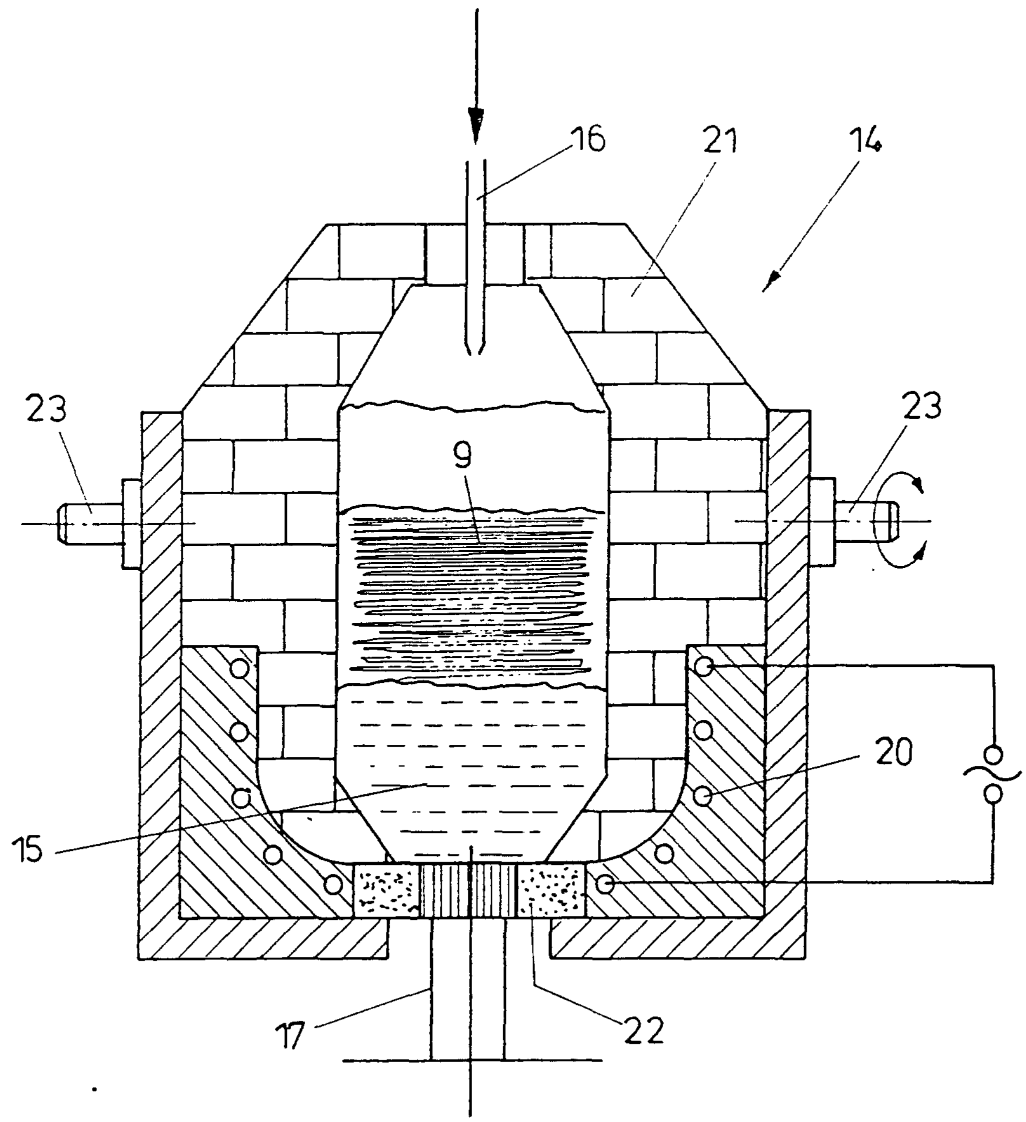


FIG. 2

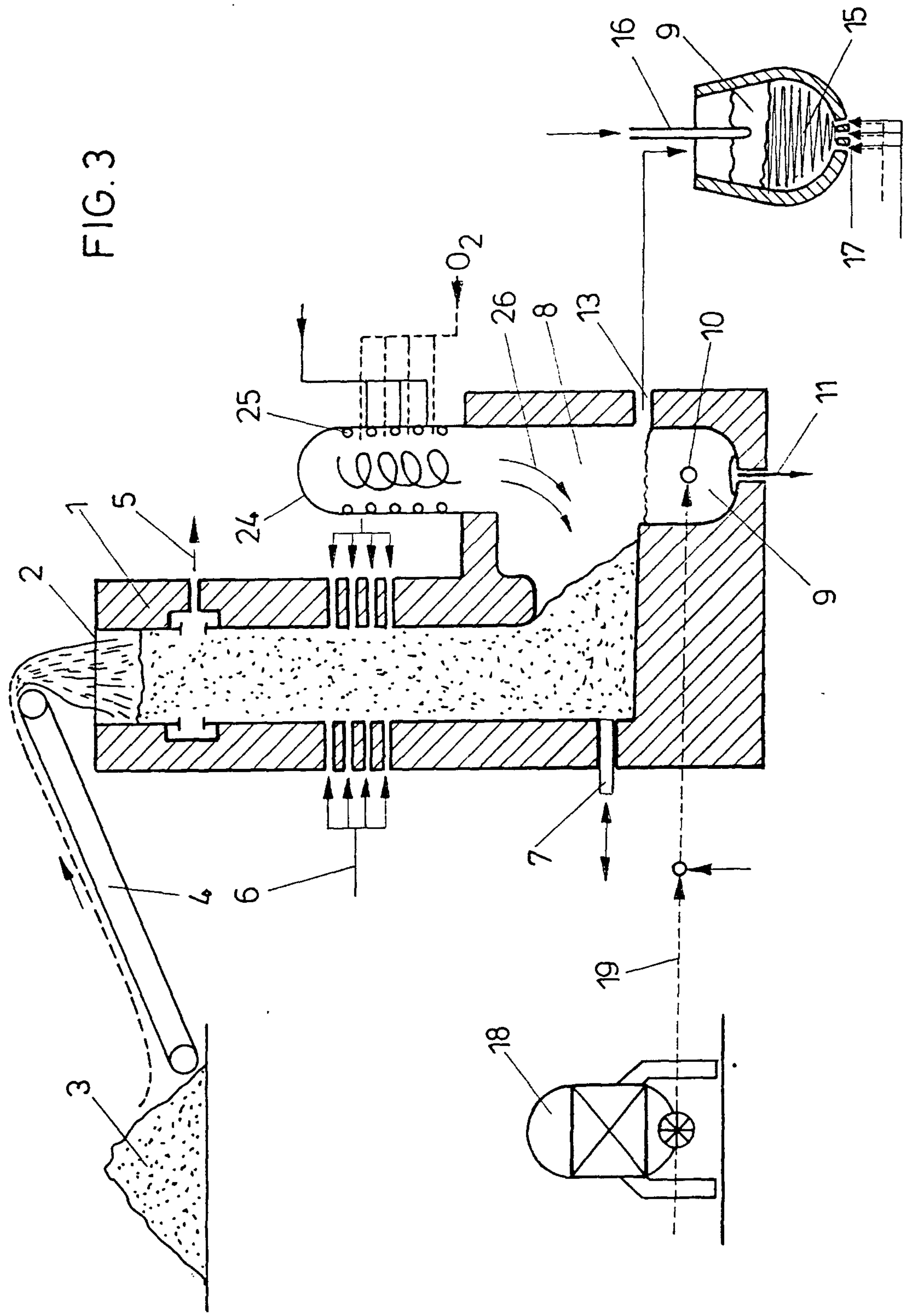


FIG. 3